# EUROPÄISCHE PATENTSCHRIFT

(11) **EP 1 827 795 B1**
(45) Veröffentlichungstag und Bekanntmachung des Hinweises auf die Patenterteilung: **26.11.2008**
(21) Anmeldenummer: 05787418.2
(22) Anmeldetag: 08.09.2005
(51) Int. Cl.: B29C 47/32, B29C 43/22, A44B 18/00

(54) **VERFAHREN ZUM HERSTELLEN EINER TRÄGERBAHN SOWIE TRÄGERBAHN**
METHOD FOR PRODUCING A SUPPORTING WEB, AND SUPPORTING WEB
PROCEDE DE PRODUCTION D'UNE BANDE SUPPORT ET BANDE SUPPORT CORRESPONDANTE

(30) Priorität: 03.12.2004 DE 102004058257
(43) Veröffentlichungstag der Anmeldung: 05.09.2007
(73) Patentinhaber: Gottlieb Binder GmbH & Co. KG, 71088 Holzgerlingen (DE)
(72) Erfinder: TUMA, Jan, 71083 Herrenberg (DE)
(74) Vertreter: Bartels & Partner
(86) Internationale Anmeldenummer: PCT/EP2005/009646
(87) Internationale Veröffentlichungsnummer: WO 2006/058569

(56) Entgegenhaltungen:
- EP-A- 0 661 007
- WO-A-20/04103685
- WO-A-20/05092589
- US-B1- 6 280 670

## Beschreibung

Die Erfindung betrifft ein Verfahren zum Herstellen einer Trägerbahn aus einer vorgebbaren Menge an Kunststoffmaterial mit einer Vielzahl an Formelementen, die in Formhohlräumen eines Formwerkzeuges geformt werden. Ferner betrifft die Erfindung eine Trägerbahn mit einer Vielzahl an Formelementen.

Durch die WO 02/13647 A2 ist ein Verfahren zum Herstellen eines Haftverschlußteils bekannt mit einer Vielzahl von einstückig mit einem Träger verbundenen und symmetrisch aufgebauten Formelementen in Form von Verhakungsmitteln in der Art jeweils eines mit einem Kopfteil versehenen Stieles, bei dem ein formbarer Werkstoff in eine Formgebungszone zwischen einem Druckwerkzeug und einem Formwerkzeug zugeführt wird. Bei dem bekannten Verfahren werden zumindest in einem Längsschnitt des jeweiligen Formhohlraumes gesehen die einander gegenüberliegenden Begrenzungswände durchgehend mit einem konvexen Bahnverlauf versehen, wobei ein stetig verlaufender Übergang zwischen den Querschnittsformen von Stiel- und Kopfteil für ein Verhakungsmittel des Trägers erreicht ist, so dass es zu einem hemmfreien Entformungsprozeß kommt.

Durch die DE 198 28 856 C1 ist ein Verfahren zur Herstellung eines Haftverschlußteils bekannt mit einer Vielzahl von einstückig mit einer Trägerbahn ausgebildeten Verhakungsmitteln als Formelemente, bei dem ein thermoplastischer Kunststoff dem Spalt zwischen einem Druckwerkzeug und einem Formwerkzeug zugeführt wird, bei dem als formgebendes Element am Formwerkzeug ein durchgehende Hohlräume aufweisendes Sieb verwendet wird, und bei dem die Verhakungsmittel dadurch gebildet werden, dass der thermoplastische Kunststoff in den Hohlräumen des Siebes zumindest teilweise erhärtet, wobei ein solches Formwerkzeug verwendet wird, das an der vom Druckwerkzeug abgekehrten Seite des Siebes ein mit dessen Hohlräumen zusammenwirkendes zweites formgebendes Element aufweist, durch das der thermoplastische Kunststoff geformt wird.

Durch die EP 1 028 639 B1 ist ein Verfahren zum Herstellen einer Trägerbahn aus Material mit mehreren Stielen bekannt, die sich von mindestens einer Seite der Bahn aus erstrecken, wobei das Verfahren die folgenden Schritte umfaßt:
- Auswählen mindestens eines ersten Materials für eine erste Materialschicht,
- Auswählen mindestens eines zweiten Materials für eine zweite Materialschicht,
- Schmelzformen der ersten Schicht mit einer ersten Oberfläche und einer zweiten Oberfläche aus dem ersten Material,
- Schmelzformen der zweiten Schicht mit einer ersten Oberfläche und einer zweiten Oberfläche aus dem zweiten Material,
- Verbinden der ersten Oberflächen der ersten und zweiten Materialschicht, während sich die Schichten im geschmolzenen Zustand befinden, zur Ausbildung einer mehrlagigen Folie und
- Ausbilden mehrerer Stiele auf mindestens der zweiten Oberfläche der zweiten Materialschicht,
- wobei dieser Formschritt das Formen der mehreren Stiele aus mindestens dem ersten Material und/oder dem zweiten Material und das Verfahren weiterhin den Schritt des Steuerns der Verarbeitungsbedingungen und der Dicke, Viskosität und relativer Größen des ersten und zweiten Materials umfaßt, derart, dass das erste Material, das die erste Schicht bildet, in oder durch die auf der zweiten Oberfläche der zweiten Schicht ausgebildeten Stiele hindurch ragt und Teil der Stiele bildet.

Ferner ist durch die Europäische Schrift eine Bahn bekannt, die nach diesem Verfahren hergestellt ist. Mit der bekannten Lösung wird mindestens eine der beiden Materialschichten durch Coextrusion des Kunststoffmaterials hergestellt, wobei in einem weiteren Verfahrensschritt die Stielenden mit einer weiteren Formgebungswalze kalandriert werden, um dergestalt ein pilzförmiges Hakenverschlußmaterial zu erhalten.

Mit den bekannten Verfahren lassen sich eine Vielzahl von verschiedenen Ausführungsformen eines Haftverschlußteils mit vorzugsweise pilzförmigen Haftverschlußteilen erhalten, die dadurch charakterisiert sind, dass das jeweilige Verschlußelement (Stiel und Kopf) massiv ausgebildet ist, d.h. durchgehend aus einem Kunststoffmaterial besteht.

Durch die EP-A-0 661 007 ist ein Verfahren zum Herstellen einer Trägerbahn aus einer vorgebbaren Menge an Kunststoffmaterial mit einer Vielzahl an Formelementen bekannt, die in Formhohlräumen eines Formwerkzeuges geformt werden, bei dem durch Anlegen eines Unterdruckes, zumindest bei einem Teil der Formhohlräume, immer so viel Menge an Kunststoffmaterial an einen Teil der Formwandung des jeweiligen Formhohlraumes gebracht wird, dass im Inneren des Formelementes ein schlaufenförmiges Befestigungselement entsteht, das quer zur Längsausrichtung der Trägerbahn beidseits eine Öffnung zur Umgebung hin aufweist, um dergestalt eine Unterhakmöglichkeit zu bieten für ein Verhakungsmittel, das bei einer Ausführungsform der bekannten Lösung korrespondierend mit einer Vielzahl an schlaufenförmigen Befestigungselementen auf einer Seite der Trägerbahn mit diesen zusammen, bei einer weiteren Ausführungsform jedoch gegenüberliegend angeordnet wird und bei einer weiteren Ausführungsform ganz weggelassen ist, so dass insoweit die Trägerbahn nur die nach außen hin offenen schlaufenförmigen Befestigungselemente aufweist.

Ausgehend von diesem Stand der Technik stellt sich die Erfindung die Aufgabe, die bekannten Verfahren und Verschlußsysteme dahingehend weiter zu verbessern, dass deren Anwendungsmöglichkeiten erweitert sind. Eine dahingehende Aufgabe löst ein Verfahren mit den Merkmalen des Patentanspruches 1 in seiner Gesamtheit sowie ein Produkt mit den Merkmalen des Patentanspruches 8.

Gemäß dem kennzeichnenden Teil des Patentanspruches 1 ist das erfindungsgemäße Verfahren dadurch charakterisiert, dass das jeweilige Formelement als pilzförmiges Verhakungsmittel derart ausgebildet wird, dass ein Kopfteil sich an einen Stiel anschließt, der wiederum in ein Fußteil übergeht, und dass die Kavität rotationssymmetrisch innerhalb des Verhakungsmittels eingebracht wird und sich vom Fußteil über den Stiel zumindest bis zum Kopfteil erstreckt. Eine entsprechend erfindungsgemäß ausgebildete Trägerbahn ist dadurch charakterisiert, dass die einzelnen Formelemente zumindest teilweise eine Kavität aufweisen, die sich rotationssymmetrisch innerhalb eines pilzförmigen Verhakungsmittels erstreckt, und zwar zwischen Fuß- und Kopfteil des jeweiligen Formelementes.

Mit der erfindungsgemäßen Lösung ist es möglich, in von der Geometrie her nahezu beliebig vorgebbaren Formelementen eine Kavität, also einen Hohlraum einzubringen, mit dem eine Vielzahl von Vorteilen erreichbar ist. Neben einer Material- und somit Gewichtseinsparung, was sich auch günstig auf die Herstellkosten auswirkt, sind durch einen Lufthohlraum bessere wärmedämmende Eigenschaften erreichbar, und zum anderen läßt sich durch die Bestimmung des Kavitätsvolumens die Steifigkeit für das Formelement einstellen, so dass dieses in vorgebbaren Grenzen eine einstellbare Nachgiebigkeit aufweist. Letzteres spielt insbesondere dann eine Rolle, wenn das Formelement erfindungsgemäß als pilzförmiges Hakenverschlußmaterial konzipiert ist mit der Folge, dass beim Wechselwirken mit einem Flauschmaterial oder einem entsprechend anderen Hakenverschlußmaterial sich die zur Bildung des geschlossenen Haftverschlusses miteinander interagierenden Elemente gegeneinander unter dem Schließdruck leichter bewegen können, was das Eingriffsverhalten deutlich verbessert. Durch das dahingehend verbesserte Eingriffsverhalten können aber dann mehr Verschlußelemente miteinander interagieren, was sich wiederum günstig auf die Schälfestigkeitswerte des Verschlusses auswirkt und somit zu einer Erhöhung der Verschlußkräfte führen kann.

Des weiteren lassen sich die Kavitäten sinnfällig nutzen, beispielsweise besteht die Möglichkeit, direkt beim Herstellprozeß oder später über Injektordüsen ein Farbmedium einzubringen, so dass nachträgliche Farbgebungsverfahren für die Trägerbahn mit Formelementen, insbesondere in Form eines Hakenverschlusses, bei dem die Farbe erst aufzudrucken ist, entfallen kann. Neben den üblichen Farben können dergestalt auch selbstleuchtende Pigmente od. dgl. als Medium eingebracht werden. Ferner besteht die Möglichkeit, die derart erzeugten Kavitäten in den Formelementen auf ihrer der Trägerbahn abgewandten Seite entweder zeitnah beim Herstellprozeß oder später mittels entsprechender Einschnitte zu öffnen, so dass dergestalt innerhalb des Formelementes Kapillare gebildet sind, mit denen sich selbstabreinigende Oberflächen (Lotus-Effekt) realisieren lassen, die von ihrer Formgebung her dann eine Kapillarwirkung aufweisen, wenn darauf geachtet wird, dass der Quotient aus Kapillararbeit K und Adhäsionsarbeit A größer als 1 ist (siehe hierzu auch DE 102 07 193 A1).

Darüber hinaus läßt sich das erfindungsgemäße Verfahren produktionstechnisch sicher und kostengünstig gestalten und insbesondere läßt sich mit einem Herstellschritt ein Hakenverschlußmaterial erhalten, wozu teilweise im Stand der Technik Mehrschrittverfahren mit nachträglicher Kalandrierung der freien Stielenden zur Kopfbildung aufgezeigt sind.
Weitere vorteilhafte Ausführungsformen der erfindungsgemäßen Lösung sind Gegenstand der sonstigen Unteransprüche.

Im folgenden wird das erfindungsgemäße Verfahren anhand einer Ausführungsform nach der Zeichnung näher erläutert. Dabei zeigen in prinzipieller und nicht maßstäblicher Darstellung die
- Fig.1: eine stark schematisch vereinfachte und teils geschnitten gezeichnete Seitenansicht einer Vorrichtung zur Durchfüh- rung des erfindungsgemäßen Verfahrens;
- Fig. 2: eine perspektivische Darstellung zweier ineinander gescho- bener Siebe mit zur Verdeutlichung in übertriebener Größe bereichsweise dargestellten, durch die Sieböffnungen gebilde- ten Hohlräumen;
- Fig. 3: in stark vergrößerter Darstellung einen Längsschnitt durch die Anordnung gemäß der Darstellung nach der Fig. 2;
- Fig. 4: ein Verhakungsmittel, wie es mit einer Vorrichtung gemäß den Darstellungen nach den Fig.1 bis 3 herstellbar ist;
- Fig. 5: eine Draufsicht auf das mit der Vorrichtung nach den Fig.1 bis 3 herstellbaren Trägerbandes mit mehreren Verhakungs- mitteln als Formelemente gemäß der Einzeldarstellung nach der Fig.4.

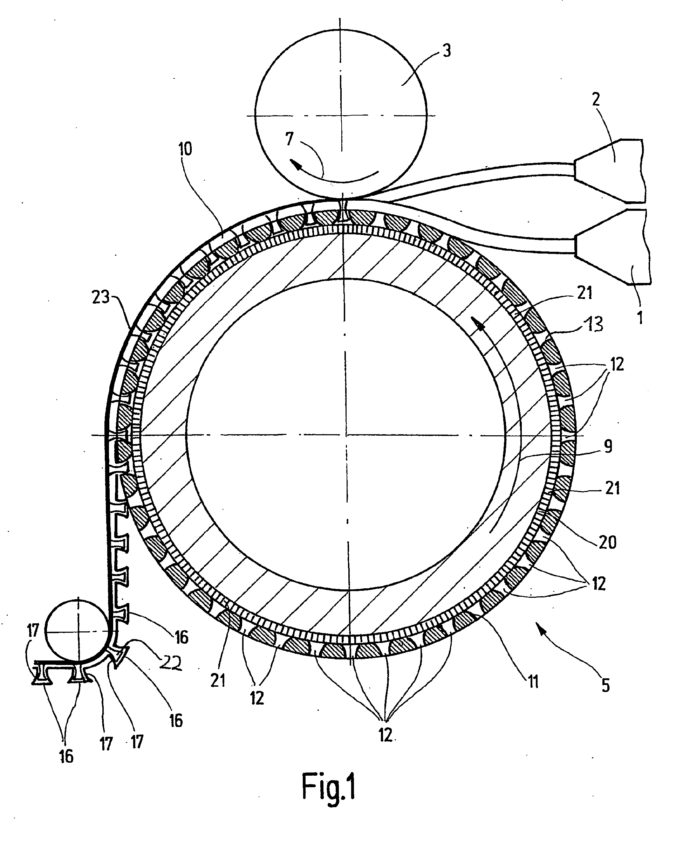

Fig. 1 zeigt in schematischer Darstellung Teile einer Vorrichtung zum Durchführen des erfindungsgemäßen Verfahrens mit einem Extruderkopf 1 als Zuführeinrichtung für in plastischem oder flüssigem Zustand befindliches Kunststoffmaterial, das als ein Band, dessen Breite im wesentlichen derjenigen des herzustellenden Haftverschlußteils entspricht, einem Spalt zwischen einem Druckwerkzeug 3 und einem Formwerkzeug 5 zugeführt wird. Als Druckwerkzeug ist eine Druckwalze vorgesehen und bei dem Formwerkzeug handelt es sich um eine als Ganzes mit 5 bezeichnete Formwalze. Beide Walzen sind in der Fig.1 mit Bogenpfeilen 7 und 9 angegebenen Drehrichtungen angetrieben, so dass zwischen ihnen ein Förderspalt gebildet wird, durch den das Kunststoffmaterial in Transportrichtung gefördert wird, während gleichzeitig im Spalt als Formgebungszone das Kunststoffband zur Trägerbahn 10 des Haftverschlußteils geformt wird und die Trägerbahn 10 an der an der Formwalze 5 anliegenden Seite durch die formgebenden Elemente der Formwalze die zur Bildung von Verhakungsmitteln erforderliche Formgebung erhält.

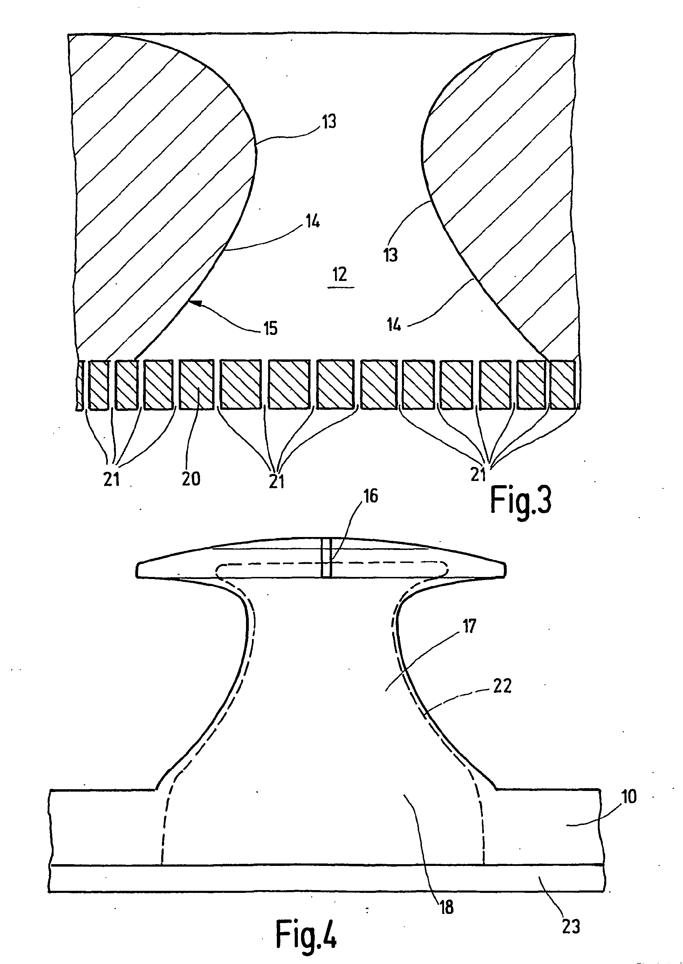

Zu diesem Zweck weist die Formwalze am Umfang ein Sieb als Formgebungsschicht 11 auf mit einzelnen Formhohlräumen 12. Ein dahingehender Formhohlraum 12 ist beispielhaft in der Fig.3 vergrößert dargestellt wiedergegeben. Des weiteren sind die Formhohlräume 12, was nicht näher dargestellt ist, in Längsrichtung über die Formwalze mit ihrem Sieb 11 außenumfangsseitig regelmäßig verteilt, wobei die Verteilung und die Anzahl frei wählbar sind. Die Fig.3 gibt einen Längsschnitt wieder des jeweils eingesetzten Formhohlraumes 12, wobei die im Längsschnitt gegenüberliegenden Begrenzungswände 13 durchgehend mit einem konvexen Bahnverlauf 14 versehen sind. Es versteht sich, dass die genannten beiden Begrenzungswände 13 im Hinblick auf den rotationssymmetrischen Aufbau des Formhohlraumes 12 dem Grunde nach Teil einer abschließenden Formgebungswand 15 sind, die durch das Siebmaterial 11 der Formwalze begrenzt wird. Mit den dahingehenden Formhohlräumen 12 ist es möglich, Verhakungsmittel herzustellen in Form jeweils eines mit einem Kopfteil 16 versehen Stiels 17 (vgl. Fig.4).

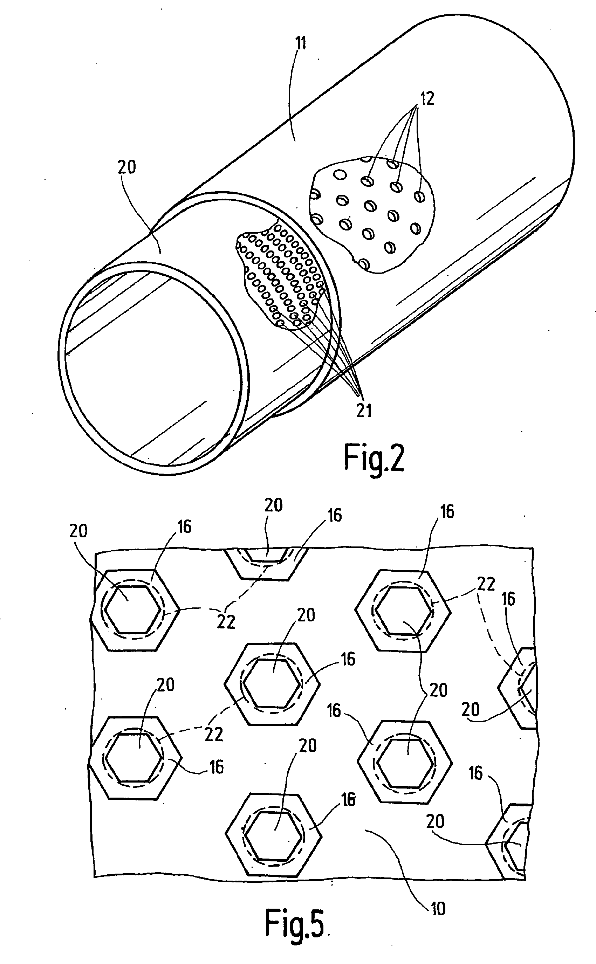

Wie die Fig.2 des weiteren zeigt, ist dabei die Krümmung des jeweiligen Bahnverlaufs 14 in Richtung des zu formenden Kopfteils 16 stärker ausgeführt als in Richtung eines Fußteils 18, über das der Stiel 17 mit der Trägerbahn 10 verbunden ist. Als besonders vorteilhaft hat sich dabei erwiesen, wenn man von der Längsrichtung des Stiels 17 aus in Richtung des Kopfteils 16 gesehen, den Bahnverlauf 14 mit seiner stärkeren Krümmung oberhalb der Mitte, vorzugsweise im oberen Drittel beginnend, vorsieht. Zum Erhalt der angesprochenen Formhohlräume 12 mit ihrem rotationssymmetrischen Aufbau in Form eines Hyperboloids haben sich als herstellungsgünstig galvanische Beschichtungsverfahren (Elektroplatinierung) erwiesen. Ferner ließe sich gegebenenfalls auch über ein Laserverfahren der konvexe Bahnverlauf 14 aus einem Sieb- oder Gittervollmaterial erzeugen.

Das in der Fig.4 dargestellte einzelne Verhakungsmittel als Formelement läßt sich mit dem vorstehend beschriebenen Verfahren erhalten. Der symmetrische Aufbau ergibt sich unmittelbar durch die Herstellung in einem Formhohlraum 12 nach der Fig.3. Das dahingehende Verhakungsmittel kann geometrisch sehr klein aufbauend sein, beispielsweise nur eine Höhe von 0,4 mm aufweisen mit einer Breite des Verschlußkopfes in der Größenordnung von 0,6 mm. Der Querschnitt des Stiels 17 beträgt bei dieser Ausführungsform ca. 0,25 mm. Ferner läßt sich gemäß der Darstellung nach der Fig.5 eine Vielzahl solcher Verhakungsmittel auf der Trägerbahn 10 anordnen. Die Kopfform des Kopfteils 16 braucht nicht weiter nachgearbeitet zu werden, so dass sich mit dem erfindungsgemäßen Verfahren mit im wesentlichen nur einem Herstellschritt sich das Verschlußmaterial erhalten läßt. Ferner kann vorgesehen sein, in die Außenkontur des an sich geschlossenen ringförmigen Kopfteils 16 Schnitte einzubringen, um derart eine Vielzahl von Verhakungen entlang des Kopfteils 16 zu erhalten. Die in den Fig.4 und 5 gezeigten Verhakungsmittel können insbesondere von ihrem Kopfteil 16 her auch ein anderes Aussehen haben, beispielsweise mit Kopfgeometrien versehen sein, wie dies in der PCT/WO 00/00053 bereits gezeigt ist.

In konzentrischer Anordnung zu dem Sieb 11 und innen- oder darunterliegend ist ein weiteres Sieb als schicht 20 vorhanden, das mit seiner Außenseite in direkter Anlage mit der Innenseite des Siebes 11 ist. Das dahingehende weitere Sieb 20 weist gegenüber den Formhohlräumen 12 des ersten Siebes eine Vielzahl von Siebdurchlässen 21 auf, beispielsweise in der Größenordnung von 10.000 bis 20.000 Durchlässen pro cm², und die derart gebildeten Durchlässe 21 sind im Durchmesser geometrisch so klein gewählt, dass sie zwar noch Luft durchlassen; im wesentlichen aber den einzuformenden Kunststoff über die Extruderdüse 1 nicht durchlassen. Ferner kann der Formgebungsprozeß für die Verhakungselemente so gesteuert werden, dass jedenfalls vor Erreichen des Kunststoffmaterials an den Durchlässen 21 der Formgebungsprozeß für das Kopfteil 16 bereits vollendet ist. Dies läßt sich beispielsweise über eine geeignete Temperatursteuerung über das Formwerkzeug 5 erreichen. Auch das weitere Sieb 20 ist galvanisch aufgebaut, wie bereits für das erste Sieb 11 beschrieben. Die Durchlässe 21 lassen sich aber auch als Durchschüsse von Laserstrahlen in zylindrischer Form erhalten. Es besteht die Möglichkeit, die Siebdurchlässe 21 gleichmäßig über den gesamten Umfang des weiteren Siebes 20 zu verteilen oder die Siebdurchlässe 21 nur an den Stellen vorzusehen (nicht dargestellt), wo sie vom Formhohlraum 12 im wesentlichen überdeckt sind.

Über eine nicht näher dargestellte Vakuum- oder Unterdruckeinrichtung, die ihre Zufuhr über das Innere (nicht dargestellt) des Formwerkzeuges 5 in Form der Formwalze hat, läßt sich dergestalt das vom Extruder stammende Kunststoffmaterial in die Formhohlräume 12 derart einsaugen, dass zum einen die Siebdurchlässe 21 von dem einströmenden Kunststoffmaterial nicht verstopft werden und zum anderen sich das Kunststoffmaterial dünnwandig an die Begrenzungswände 13 anlegt, so dass für jedes Formelement eine Kavität 22 gebildet ist, wie sie beispielhaft in der Fig.4 für ein Verhakungselement aufgezeigt ist. Die dahingehende Kavität 22 erstreckt sich rotationssymmetrisch innerhalb des Verhakungsmittels von seinem Fußteil 18 über den Stiel 17 und mündet im Kopfteil 16 aus. Ferner durchgreift die dahingehende Kavität 22 die Trägerbahn 10 und mündet dergestalt in die Umgebung.

In Abhängigkeit des angelegten Unterdruckes lassen sich die Kavitäten 22 von ihrer geometrischen Ausgestaltung her steuern und mithin auch die Wanddicke für Fußteil 18, Stiel 17 und Kopfteil 16 des jeweiligen Verhakungsmittels. Durch Weglassen von Siebdurchlässen 21 oder durch Verschließen dieser Durchlässe 21 oder durch Anbringen von Unterdruck nur für bestimmte Siebdurchlässe 21 lassen sich bestimmte einzelne Verhakungselemente auch frei von Kavitäten 22 erzeugen. Ferner besteht mit einem dahingehenden Verfahren nebst Vorrichtung auch die Möglichkeit, konventionelle Verschlußsysteme ohne Kavität 22 zu erzeugen und wahlweise bei Bedarf mit Kavität 22, je nachdem, ob man das Verfahren unterdruckfrei bzw. mit Unterdruck betreibt. Bei entsprechend hohem Unterdruck besteht auch die Möglichkeit, dass die Kavität 22 die Oberseite des Kopfteils 16 durchdringt (nicht dargestellt), so dass sich dergestalt innerhalb des Verschlußmaterials Käpillarröhrchen erzeugen lassen, was eine Selbstabreinigung dahingehender Oberflächen begünstigt (siehe hierzu Offenbarungsgehalt der DE 102 07 193 A1).

Bei geeigneter Auswahl eines Kunststoffmaterials läßt sich gegebenenfalls die Trägerbahn 10 mit ihrem Formelement mit Kavitäten 22 selbständig herstellen. Zur Erhöhung der Stabilität und insbesondere zur Erleichterung der Ausformung der Trägerbahn 10 aus dem Formwerkzeug 5 mit seinen Formhohlräumen 12, kann jedoch das Anbringen einer Verschlußbahn 23 auf der Rückseite der Trägerbahn 10 angeraten sein. Zum Erzeugen der dahingehenden Verschlußbahn 23 aus einem geeigneten Kunststoffmaterial dient ein weiterer Extruderkopf 2 gemäß der Darstellung nach der Fig.1. Sofern, wie in der Fig.1 gezeigt, zwei Extruderköpfe 1,2 Anwendung finden, entsteht dem Grunde nach ein Mehrschichtaufbau für ein Verhakungsmittel in der Art eines coextrudierten Haftverschlusses. Dem Grunde nach besteht aber auch die Möglichkeit, den weiteren Extruderkopf 2 durch eine Abrolleinrichtung zu ersetzen, von der eine folienartige Kunststoff- aber auch Metallbahn abwickelbar sein könnte, die dann die Rückseite der Trägerbahn 10 ausbildet. So wäre es beispielsweise auch möglich, auf eine dahingehende Metall- oder Folienbahn aus Kunststoff einseitig ein Klebstoffmittel aufzubringen, auf dem dann die auszuformende Trägerbahn 10 haften bleibt. Bei einem geeigneten Klebstoff könnte die dahingehende Werkstoffverbindung der Schichten auch wieder lösbar sein. Bei dem in den Figuren gezeigten Ausführungsbeispiel ist jedoch vorzugsweise vorgesehen, dass die Trägerbahn 10 mit den Formelementen aus einem sog. Low-Density-Polyethylen (LDPE) - Werkstoff und die Rückseite oder Verschlußbahn 23 aus einem High Density Polyethylen (HDPE) - Werkstoff besteht.

Wie insbesondere die Fig.4 verdeutlicht, kann die Kavität 22 zu einem Verhakungselement führen, das sehr dünnwandig ausgebildet ist und mithin beim Eingriff mit sonstigen Verhakungsmitteln einschließlich dem sog. Flausch- oder Hookmaterial entsprechend nachgiebig im Verhakungsverhalten sein kann, was die Anzahl an Verhakungsmöglichkeiten erhöht und mithin zu einer verbesserten Verschlußkraftsituation für die einzelnen Verhakungsmittel führt. Insbesondere in der Bekleidungs- und Windel industrie, wo die Haftverschlüsse ein "sanftes Verhalten" aufweisen sollen, um Hautschädigungen zu vermeiden, sind dann derart aufgebaute Verschlußelemente mit Kavitäten 22 mehr als sinnvoll. Ferner besteht die Möglichkeit, während des Herstellprozesses oder nachträglich die Kavität 22 zu füllen, beispielsweise mit einem Farbmedium, so dass das spätere Einfärben des Verschlusses entfallen kann. Auch können selbständig leuchtende Medien dergestalt in die Kavitäten 22 eingebracht werden, was die Design-Möglichkeiten für den Verschluß erhöht.

Das erfindungsgemäße Verfahren braucht nicht auf die Anwendung für Verschlußelemente eingeschränkt zu sein; vielmehr besteht hier eine Vielzahl von Ausführungsformen für verschiedenste Arten an Formelementen. So lassen sich bei einem modifizierten Siebaufbau mit dem aufgezeigten Formgebungsverfahren auch nur zylindrische Stiele 17 mit entsprechend zylindrisch gestalteten Kavitäten 22 erreichen. In Abhängigkeit des Formhohlraumaufbaues für das Formwerkzeug 5 ist dergestalt eine Vielzahl an Ausführungsgestaltungen denkbar. Die beiden Siebe 11, 20 lassen sich bei Verschleiß einfach von der eigentlichen Formwalze abziehen und gegen neue Siebe austauschen. Auch besteht zumindest die Möglichkeit, das weitere Sieb 20 als einstückigen Bestandteil der Formwalze herzustellen oder insgesamt eine Formwalze mit dem Formhohlraumverlauf 12 nebst Siebdurchlässen 21.
Die zur verarbeitenden Kunststoffe können vielfältig sein, beispielsweise in Form von Polyamiden oder Polyolefinen, wie Polypropylen oder Polyethylen (HDPL und LDPL). Ferner kommen auch andere Thermoplaste zum Einsatz, wie Polyester, Polyethylenterephthalat, Polystyrene, Polycarbonate, Polymethylmethacrylate, Ethylen Vinylacetat Copolymere einschließlich Acrylat modifizierte Ethylene, Vinylacetat Polymere und Ethylen Acryl Azid Copolymere sowie Polyethylenstyrene. Ferner ist die Anwendung von Duroplasten denkbar sowie von Elastomeren, wie natürlich oder synthetisch herstellbarer Gummi einschließlich von Styren Block Copolymeren mit Anteilen von Isopren, Buta-dien oder Ethylen (Butylene)-Blocks. Ferner besteht Verwendung für metallocen-catalisiertes Polyolefin, Polyurethan oder Polydiorganosiloxane. Sofern die aufgezeigten Bahnen mit den Formelementen nicht vollständig im Coextrusionsverfahren erhalten werden, sondern beispielsweise aus der Kombination von einer metallischen Bahn mit einer Trägerbahn aus Kunststoff besteht, finden zur Verbindung der Bahnen drucksensitive Klebstoffe oder Hot-melt-Klebstoffe Anwendung. Zur Aussteifung der jeweiligen Bahn und zur Verstärkung sind duktile Thermoplaste anwendbar, wie Nylon oder Polyvinylchlorid. Der derart hergestellte Formelementartikel läßt sich auch mit Beschichtungen und Coatings versehen, die sich auch aufdampfen oder aufrakeln lassen. Ferner sind zur Herstellung einer Strukturierung im Sinne von selbstabreinigenden Oberflächen Nachbehandlungen möglich, sei es mit Laser, Ultraschall od. dgl. mehr. Ferner können Herstellmaterialien eingesetzt werden, die biologisch abbaubar sind.

## Patentansprüche

1. Verfahren zum Herstellen einer Trägerbahn (10) aus einer vorgebbaren Menge an Kunststoffmaterial mit einer Vielzahl an Formelementen, die in Formhohlräumen (12) eines Formwerkzeuges (5) geformt werden, wobei unter Anlegen eines Unterdruckes zumindest bei einem Teil der Formhohlräume (12) immer so viel Menge an Kunststoffmaterial an die Formwandung (13) des jeweiligen Formhohlraumes (12) gebracht wird, dass im Inneren des Formelementes eine Kavität (22) gebildet wird, **dadurch gekennzeichnet, dass** das jeweilige Formelement als pilzförmiges Verhakungsmittel derart ausgebildet wird, dass ein Kopfteil (16) sich an einen Stiel (17) anschließt, der wiederum in ein Fußteil (18) übergeht, und dass die Kavität (22) rotationssymmetrisch innerhalb des Verhakungsmittels eingebracht wird und sich vom Fußteil (18) über den Stiel (17) zumindest bis zum Kopfteil (16) erstreckt.

2. Verfahren nach Anspruch 1, **dadurch gekennzeichnet, dass** die jeweilige Kavität (22) im zuordenbaren Formelement zumindest nach einer Seite hin von einer Verschlußbahn (23) verschließbar ist.

3. Verfahren nach Anspruch 2, **dadurch gekennzeichnet, dass** mindestens eine der Bahnen (10,23) aus einem Coextrudat gebildet wird.

4. Verfahren nach Anspruch 2 oder 3, **dadurch gekennzeichnet, dass** mindestens eine der Bahnen (10,23) aus einer Sperrschicht - auch in metallischer Form - gebildet wird.

5. Verfahren nach einem der Ansprüche 2 bis 4, **dadurch gekennzeichnet, dass** die Kavitäten (22) der Formelemente auf ihrer der Verschlußbahn (23) gegenüberliegenden Seite derart gebildet werden, dass sie in die Umgebung münden.

6. Verfahren nach einem der Ansprüche 1 bis 5, **dadurch gekennzeichnet, dass** die Kavitäten (22) mit mindestens einem Medium ausgefüllt werden.

7. Verfahren nach einem der Ansprüche 1 bis 6, **dadurch gekennzeichnet, dass** das Formwerkzeug (5) aus einer Formwalze oder einem Formband gebildet wird und dass neben mindestens einer Formgebungsschicht (Sieb 11) eine Schicht (weiteres Sieb 20) zum Aufbringen des Unterdruckes vorgesehen wird.

8. Trägerbahn (10) mit einer Vielzahl an Formelementen, insbesondere hergestellt durch ein Verfahren nach einem der vorangehenden Ansprüche, die zumindest teilweise eine Kavität (22) aufweisen und **dadurch gekennzeichnet sind, dass** das jeweilige Formelement als pilzförmiges Verhakungsmittel derart ausgebildet ist, dass ein Kopfteil (16) sich an einen Stiel (17) anschließt, der wiederum in ein Fußteil (18) übergeht, und dass die Kavität (22) rotationssymmetrisch innerhalb des Verhakungsmittels eingebracht ist und sich vom Fußteil (18) über den Stiel (17) zumindest bis zum Kopfteil (16) erstreckt.

9. Trägerbahn (10) nach Anspruch 8, **dadurch gekennzeichnet, dass** die jeweilige Kavität (22) eines Formelementes auf mindestens einer Seite von einer Verschlußbahn (23) verschlossen ist.

## Claims

1. Method for producing a supporting web (10) from a definable amount of plastic material with a plurality of moulded elements which are moulded in mould cavities (12) of a moulding tool (5), in which, by application of a negative pressure, at least in some of the mould cavities (12), there is always so much plastic material applied to the mould wall (13) of the respective mould cavity (12) that a cavity is formed within the moulded element (22), **characterised in that** the respective moulded element is embodied as a mushroom-shaped hook fastener means such that a head part (16) is attached to a stalk (17), which in turn transitions into a foot part (18), and that the cavity (22) is inserted rotationally-symmetrically inside the hooking means, and extends from the foot part (18) via the stalk (17) at least as far as the head part (16).

2. Method according to claim 1, **characterised in that** the respective cavity (22) in the assignable moulded element can be closed at least to one side by a fastener web (23).

3. Method according to claim 2, **characterised in that** at least one of the webs (10, 23) is formed from a coextrudate.

4. Method according to claim 2 or 3, **characterised in that** at least one of the webs (10, 23) is formed from a blocking layer - also in metallic form.

5. Method according to one of claims 2 to 4, **characterised in that** the cavities (22) of the moulded elements on their side opposite the fastener web (23) are formed such that they open out to the exterior.

6. Method according to one of claims 1 to 5, **characterised in that** the cavities (22) are filled with at least one medium.

7. Method according to one of claims 1 to 6, **characterised in that** the mould tool (5) is formed from a mould roller or a moulding belt and **in that**, in addition to at least one forming layer (screen 11) there is a layer (further screen 20) to apply the negative pressure.

8. Supporting web (10) with a plurality of moulded elements, especially produced by a method according to one of the preceding claims, at least some of which have a cavity (22) and are **characterised in that** the respective moulded element is embodied as a mushroom-shaped hooking means, in such a way that the head part (16) is attached to a stalk (17), which in turn transitions into a foot part (18), and that the cavity (22) is inserted rotationally-symmetrically inside the hooking means, and extends from the foot part (18) via the stalk (17) at least as far as the head part (16).

9. Supporting web according to claim 8, **characterised in that** the respective cavity (22) of a moulded element is closed on at least one side by a fastener web (23).

## Revendications

1. Procédé de fabrication d'une bande (10) support constituée d'une quantité pouvant être prescrite de matière plastique et comportant une pluralité d'éléments moulés, qui sont moulés dans des empreintes (12) d'un outil (5) de moulage, dans lequel par application d'un vide au moins dans une partie des empreintes (12), il est apporté à la paroi (13) de moulage de l'empreinte (12) respective toujours une quantité de matière plastique telle qu'il est formé à l'intérieur de l'élément moulé une cavité (22), **caractérisé en ce que** l'élément moulé respectif est réalisé sous la forme d'un moyen d'accrochage en forme de champignon de telle sorte qu'une partie (16) de tête se raccorde à une tige (17) qui se prolonge en outre en une partie (18) de pied, et **en ce que** la cavité (22) est de révolution à l'intérieur du moyen d'accrochage et s'étend de la partie (18) de pied au moins jusqu'à la partie (16) de tête en passant par la tige (17).

2. Procédé suivant la revendication 1, **caractérisé en ce que** la cavité (22) respective dans l'élément moulé pouvant être associé peut être fermée au moins d'un côté par une bande (23) de fermeture.

3. Procédé suivant la revendication 2, **caractérisé en ce que** au moins l'une des bandes (10, 23) est en un co-extrudat.

4. Procédé suivant la revendication 2 ou 3, **caractérisé en ce que** au moins l'une des bandes (10, 23) est en une couche de blocage - également sous forme métallique.

5. Procédé suivant l'une des revendications 2 à 4, **caractérisé en ce que** les cavités (22) des éléments moulé sont, de leur côté opposé à la bande (23) de fermeture, réalisés de telle manière qu'elles débouchent à l'extérieur.

6. Procédé suivant l'une des revendications 1 à 5, **caractérisé en ce que** les cavités (22) sont emplies d'au moins un fluide.

7. Procédé suivant l'une des revendications 1 à 6, **caractérisé en ce que** l'outil (5) de moulage est réalisé à partir d'un rouleau de moulage ou d'une bande de moulage, et **en ce que**, outre au moins une couche donnant une forme (tamis 11) il est prévu une couche (tamis 20 supplémentaire) pour appliquer le vide.

8. Bande (10) support comportant une pluralité d'éléments moulés, notamment fabriquée par un procédé suivant l'une des revendications précédentes, qui comporte au moins en partie une cavité (22) et **caractérisé en ce que** l'élément moulé respectif est réalisé sous la forme d'un moyen d'accrochage en forme de champignon de telle sorte qu'une partie (16) de tête se raccorde à une tige (17), qui se prolonge en outre en une partie (18) de pied, et **en ce que** la cavité (22) est de révolution à l'intérieur du moyen d'accrochage, et s'étend de la partie (18) de pied au moins jusqu'à la partie (16) de tête en passant par la tige (17).

9. Bande (10) support suivant la revendication 8, **caractérisée en ce que** la cavité (22) respective d'un élément moulé est fermée au moins d'un côté par une bande (23) de fermeture.
